# EUROPÄISCHE PATENTSCHRIFT

(11) **EP 0 914 797 B1**
(45) Veröffentlichungstag und Bekanntmachung des Hinweises auf die Patenterteilung: **13.04.2005**
(21) Anmeldenummer: 97119400.6
(22) Anmeldetag: 06.11.1997
(51) Int. Cl.: A47L 13/146, A47L 13/258, B29C 45/17

(54) **Feuchtwischer für plane Flächen**
Wet-cleaning implement for planar surfaces
Appareil pour le nettoyage humide des surfaces planes

(43) Veröffentlichungstag der Anmeldung: 12.05.1999
(73) Patentinhaber: LEIFHEIT Aktiengesellschaft, D-56377 Nassau (DE)
(72) Erfinder: Ohm, Heinz Josef, 65550 Limburg (DE); Pakusa, Norbert, 56377 Schweighausen (DE)

(56) Entgegenhaltungen:
- EP-A- 0 268 787
- EP-A- 0 494 021
- DE-A- 1 908 928
- DE-C- 617 197
- DE-U- 1 954 499
- GB-A- 2 203 932
- US-A- 4 455 705
- US-A- 5 483 720

## Beschreibung

Die Erfindung bezieht sich auf einen Feuchtwischer für plane Flächen mit zwei über Gelenkhebel gegeneinander pressbaren Wischplatten mit Wischpad.

Ein derartiger Feuchtwischer wurde durch das Deutsche Gebrauchsmuster 19 54 499 bekannt. Ein ähnliches, marktgängiges Gerät ist in der DE-PS 19 08 928 beschrieben. Beiden Geräten gemeinsam ist die Verwendung eines Schwammes als Wischpad. Ein derartiger Schwamm hat zwar eine genügend große Wasseraufnahmefähigkeit, er kann aber nur in vergleichsweise geringem Umfang Schmutz binden und er hat ein mangelhaftes Schmutzlöseverhalten. Eine Scheuerwirkung ist praktisch nicht vorhanden. Des weiteren ist nachteilig, daß zum Betätigen ein mehrfach umgelenktes Gestänge erforderlich ist, was das Gerät naturgemäß in der Fertigung verteuert. Zudem sind diese Teile störanfällig und da aus Metall gefertigt, korrosionsempfindlich.

Die DE 617 197 offenbart ein Wischgerät mit geteiltem Wischerkopf, wobei ein Wischerkopfbelag an zwei verschwenkbaren Metallplatten festgelegt ist. Die Metallplatten sind dabei über Lagerböcke gelenkig mit einem Hebelmechanismus verbunden, um zusammengefaltet zu werden. Mittig sind die Platten über weitere Lagerböcke mit dem Ende einer Stange gelenkig verbunden. Die Lagerböcke müssen jeweils an den metallischen Platten montiert werden.

Aufgabe der Erfindung ist es, einen Feuchtwischer für plane Flächen zu schaffen, der kostengünstig gefertigt werden kann, der ein genügend großes Schmutzaufnahmevermögen hat und dessen Wischpad auch geeignet ist, durch seine Scheuerwirkung hartnäckigen Schmutz zu lösen. Diese Aufgabe wird mit den Merkmalen des Anspruchs 1 gelöst. Durch die aktive Einbindung des Stieles als Betätigungsglied für das Verstellen der Wischplatten wird die Konstruktion und somit die Montage sowie die Fertigungskosten entscheidend beeinflußt. Das Gerät wird kostengünstiger und formschöner. Die Verschiebehülse, Druckarme und Gelenkhebel können als Kunststoffteile ausgebildet werden. Es wird eine gleichmäßige Kraftverteilung auf die Wischplatten ermöglicht, was naturgemäß die Reinigungsleistung positiv beeinflußt. Zudem wird die Handhabung vereinfacht, ein zusätzlicher Schwenkhebel zur Bedienung der Zugstange entfällt.

Ausgestaltungen der Erfindung sind den Unteransprüchen zu entnehmen. Durch die Anlenkung der beiden Wischplatten über Doppelgelenke an einem planen Zwischenstück, an dem gelenkig der Stiel angreift und der etwa mittigen Anlenkung der Gelenkhebel an den Wischplatten wird eine besonders großflächige und gleichmäßige Kraftverteilung gewährleistet. Dadurch kann insgesamt mit geringerem Anspressdruck gewischt werden. Das Wischtuch wird bei gleicher Reinigungsleistung geschont, seine Lebensdauer beträchtlich erhöht. Andererseits sind hohe Auspresskräfte möglich, die bei Ausführung der Schiebehülse, der Gelenkhebel und der Wischplatten im Gasinnendruckverfahren noch gesteigert werden können.

Zur Vereinfachung der Handhabung sind auf der Unterseite der Wischplatten Haltehaken, angeformt, an denen in der Art eines Klettverschlusses das Wischpad befestigt wird. Da die Haltehaken in einem Arbeitsgang mit den Wischplatten gefertigt werden, ist keinerlei zusätzlicher Aufwand erforderlich, um irgendwelche Halteelemente anzukleben.

Zum sicheren Halt einerseits und zum optimalen Auspressen der Feuchtigkeit aus dem Wischpad andererseits ist dieses zweckmäßigerweise zweischichtig aus einem Grundhaft- und einem Aktivwischteil aufgebaut. Das Grundhaftteil übernimmt dabei eine Polster- bzw. Federwirkung und dient zusätzlich als Wischwasserreservoir. Das Aktivwischteil, das kraftschlüssig mit dem Grundhaftteil durch Aufkaschieren oder einem anderen geeigneten Verfahren verbunden ist, kann voll auf seine Aufgabe des Schmutzlösens und der Schmutzaufnahme ausgelegt werden.

Dabei können für unterschiedliche Reinigungsaufgaben sowie Fußbodenarten unterschiedliche Aktivwischteile zum Einsatz kommen. So sind die häufig verwendeten Laminatböden als auch die Parkettböden relativ feuchteempfindlich, so daß diese nach Möglichkeit mit nur ganz geringem Feuchteüberschuß gereinigt werden. Dazu bietet sich an, das Aktivwischteil aus einem Fensterleder bzw. einem synthetischen Leder zu fertigen. Hierbei hat sich überraschenderweise ein Synthetikleder aus einem Baumwoll-Polyestergewebe (40:60) mit koagulierter Polyurethanschicht, die velourartig aufgerauht ist, besonders bewährt. Für die Reinigung von PVC-Böden und normal glatten Marmor- und Fliesenböden bietet sich ein Aktivwischteil aus einem an sich bekannten, getufteten bzw. gewebten, Florfäden aus einem Baumwoll-Polyesterfasergemisch aufweisenden Tuch an. Die Florfäden sind dabei in Cut-Ausführung konfektioniert, während sie für die Anwendung bei groben und stark verschmutzten Böden vorzugsweise in der Lupp-Konfektionierung Verwendung finden.

Zur Vermeidung von Chemiefasern wie Polyester, Polyamid, Acryl und andere, die die Aufgabe des Schmutzlösens haben, während die Baumwollfaser den Schmutz aufnimmt, hat sich überraschenderweise gezeigt, daß diese beiden Aufgaben durch ein Tuch mit eng beieinanderstehen Leinen-Florfäden gelöst werden können. Es hat sich nämlich gezeigt, daß die Leinenfaser praktisch als Mircofaser wirkt und wesentlich weniger fäulnisanfällig als die Baumwollfaser ist. Dennoch hat sie ein gutes Schmutz- und Wasseraufnahmevermögen. Es kommt noch hinzu, daß eine derartige Naturfaser wesentlich leichter auszupressen ist als eine Chemiefaser und daß insbesondere die Restfeuchte gehalten wird, während bei einer Chemiefaser, die das Wasser ohnehin nur über die Kapilarwirkung hält, auch bei geringer Restfeuchte ein weiteres Abtropfen erfolgt.

Ein Ausführungsbeispiel der Erfindung wird im folgenden anhand der Zeichnungen näher erläutert. Es zeigen:

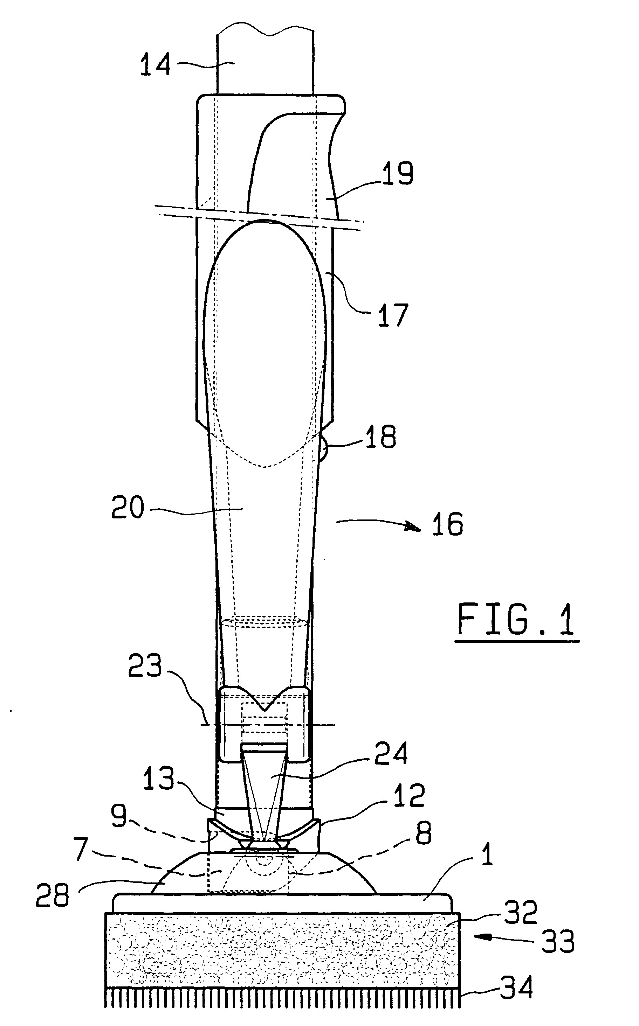

- Figur 1: eine Seitenansicht in Wischstellung,

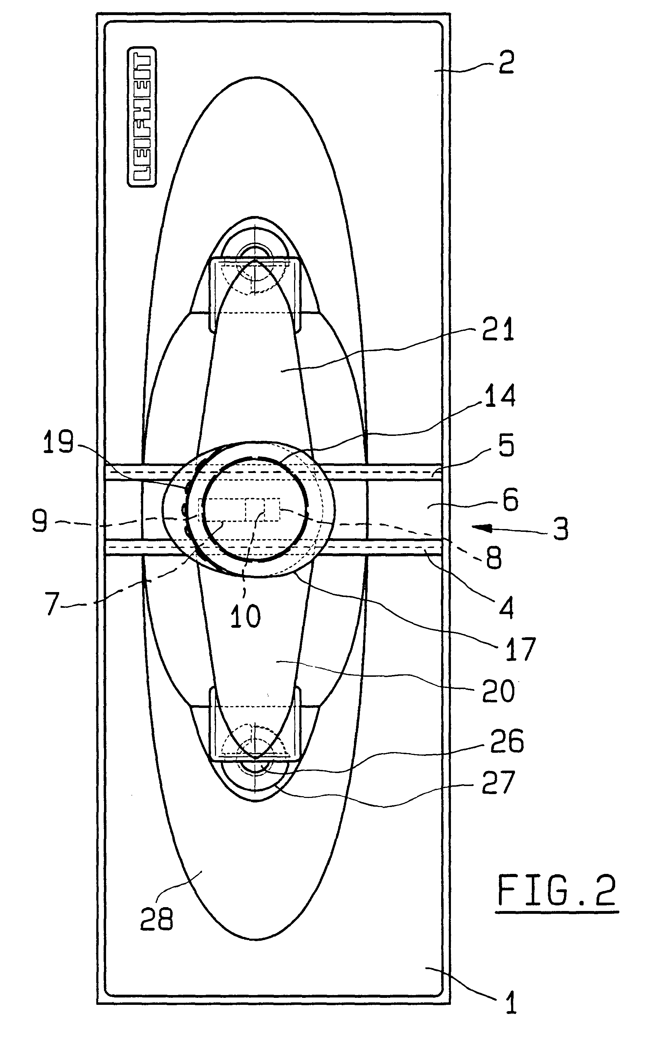

- Figur 2: eine Draufsicht,
- Figur 3: eine Frontansicht, teilweise geschnitten, in Wischstellung und
- Figur 4: eine Frontansicht in Pressstellung ohne Wischpad.

Zwei Wischplatten 1 und 2 sind unter Zwischenschaltung eines Doppelgelenkes 3 miteinander verbunden. Das Doppelgelenk 3 wird durch zwei Filmscharniere 4 und 5 gebildet, so daß eine Zwischenplatte 6 entsteht. Auf der Zwischenplatte 6 ist ein Steg 7, der auf der Vorderseite 8 abgerundet und auf der Rückseite 9 rechteckig ausgebildet ist, angeformt. Der Steg 7 ist mit einer Bohrung 10 zur Aufnahme einer Halteachse 11, über die die Stielaufnahme 12 nach vorne schwenkbar befestigt ist. Die Stielaufnahme 12 geht in einen runden Zapfen 13 über, auf den der Stiel 14 mittels Presssitz aufgesteckt ist. Die Stielaufnahme 12 ist nach Vorne mit einem offenen Schlitz 15 versehen, so daß ein Verschwenken nach Vorne, also in Pfeilrichtung 16, möglich ist.

Auf dem Stiel 14 ist eine Verschiebehülse 17 bis zu einem Anschlag 18 verschiebbar gelagert. Der Anschlag 18 definiert die Ausrichtung der Wischplatte 1 und 2 sowie der Zwischenplatte 6 in einer Ebene.

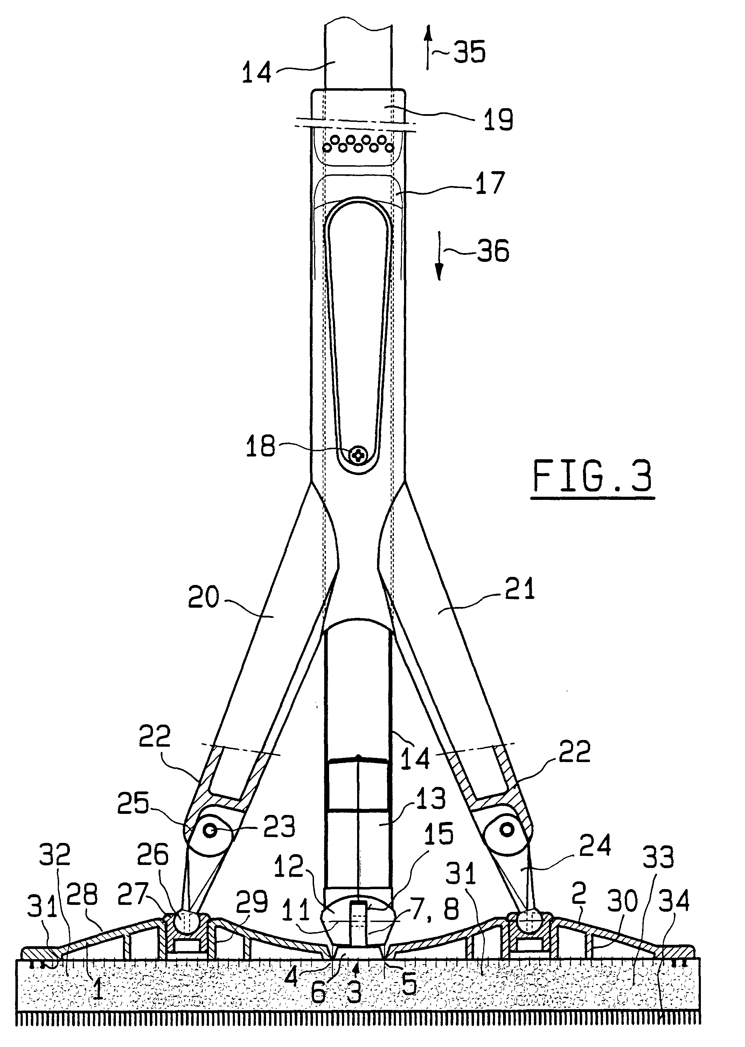

Die Verschiebehülse 17 besteht aus einem Griffbereich 19 und zwei V-förmig ausgerichteten Druckarme 20 und 21. Am Ende 22 der Druckarme 20 und 21 sind über Drehachsen 23 Gelenkhebel 24 befestigt. Die Gelenkhebel 24 laufen, wie in Figur 3 dargestellt, gegen die Anschlagfläche 25, so daß der maximale Ausschlag exakt definiert ist. Die Gelenkhebel 24 sind endseitig über eine angeformte Kugel 26 in einer in den Wischplatten 1, 2 verrasteten Kugelaufnahme 27 beweglich gelagert.

Zur Halterung der Kugelaufnahme 27 sind in den Wischplatten 1 und 2 in einer elliptischen Erhöhung 28 Haltehülsen 29 eingeformt. Diese Haltehülsen 29 sowie zusätzliche Stege 30 gewährleisten eine gleichmässige Krafteinleitung und Kraftverteilung in die Wischplatten 1 und 2. Auf der Unterseite der Wischplatten 1 und 2 sowie auf der Zwischenplatte 6 sind Haken 31 angeformt, die nach Art eines Klettverschlusses in das Grundhaftteil 32 eines Wischpads 33 eingreifen. An das Grundhaftteil 32 ist das Aktivwischteil 34 aufkaschiert.

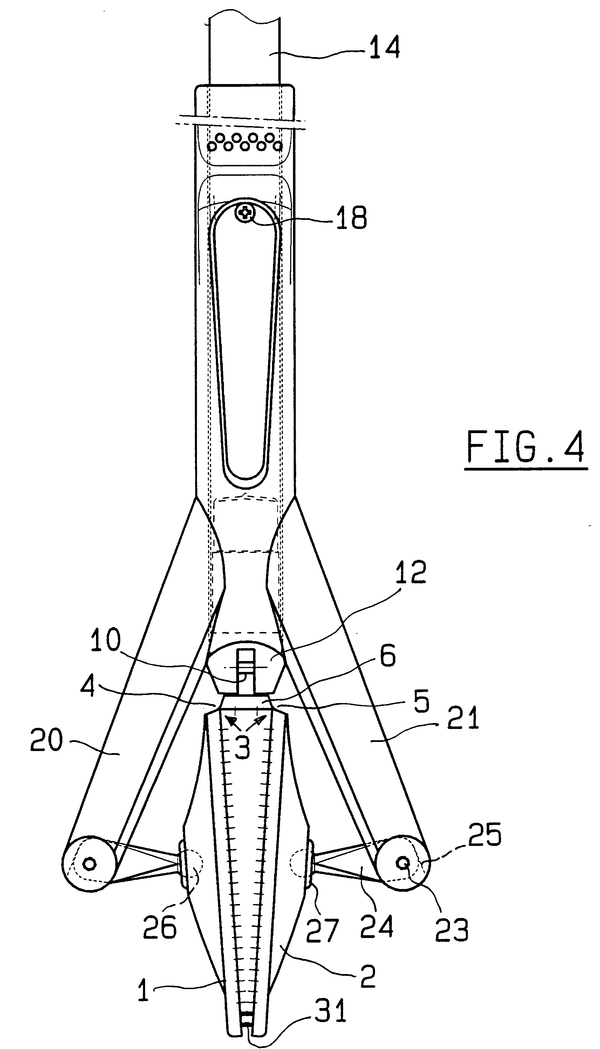

Die Funktionsweise ist aus den Figuren 3 und 4 leicht ersichtlich. In Figur 3 ist die Wischstellung dargestellt, die durch den Anschlag 18 im Stiel 14 fixiert ist. Zum Ausdrücken des Wischpads 33 wird der Stiel 14 in Richtung 35 bzw. die Verschiebehülse 17 in Richtung 36 verschoben, so daß die in Figur 4 dargestellte Situation entsteht.

Durch die leichte V-Stellung der Druckarme 20 und 21 und die mittige Anlenkung der Gelenkhebel 24 werden ideale Hebelverhältnisse erreicht, so daß bei einer relativ geringen Zugkraft an der Verschiebehülse 17, die leicht von einer Frau aufzubringen ist, große Presskräfte realisiert.

## Patentansprüche

1. Feuchtwischer für plane Flächen mit zwei an einem Stiel (14) befestigten, unter Zwischenschaltung eines Doppelgelenkes verbundenen, mittels an V-förmig ausgerichteten Druckarmen (20, 21) angeordneten Gelenkhebeln (24) gegeneinander pressbaren Wischplatten (1, 2) mit Wischpad (33), wobei der Stiel (14) schwenkbar am Doppelgelenk (4, 5, 6) befestigt ist, und auf dem Stiel (14) eine Verschiebehülse (17) gelagert ist, an der die Druckarme (20, 21) angeformt und über die Gelenkhebel (24) mit den Wischplatten (1, 2) mit Wischpad (33) beweglich verbunden sind, **dadurch gekennzeichnet, dass** für die Ausbildung des Doppelgelenkes die Wischplatten (1, 2) jeweils über ein Filmscharnier (4, 5) mit einer Zwischenplatte (6) verbunden sind, an der ein Steg (7) zur Verbindung mit einer schwenkbaren Stielaufnahme angeformt ist.

2. Feuchtwischer für plane Flächen nach Anspruch 1, **dadurch gekennzeichnet, dass** die Gelenkhebel (24) mittig an den Wischplatten (1, 2) angelenkt sind.

3. Feuchtwischer für plane Flächen nach Anspruch 1 oder 2, **dadurch gekennzeichnet, dass** auf der Unterseite der Wischplatten (1, 2) Haltehaken (31) zur Verbindung mit dem Wischpad (33) angeformt sind.

4. Feuchtwischer für plane Flächen nach einem der Ansprüche 1 bis 3, **dadurch gekennzeichnet, dass** das Wischpad (33) zumindest zweischichtig aus einem Grundhaftteil und einem Aktivwischteil (32, 34) aufgebaut ist.

5. Feuchtwischer für plane Flächen nach Anspruch 4, **dadurch gekennzeichnet, dass** das Aktivwischteil (34) aus einem Fensterleder (synthetisch oder natur) besteht.

6. Feuchtwischer für plane Flächen nach Anspruch 4, **dadurch gekennzeichnet, dass** das Aktivwischteil (34) aus einem getufteten oder gewebten, Florfäden aus einem Baumwoll-Polyesterfasergemisch aufweisendem Tuch gefertigt ist.

7. Feuchtwischer nach Anspruch 4, **dadurch gekennzeichnet, dass** das Aktivwischteil (34) aus einem Leinenflorfäden aufweisenden Tuch gefertigt ist.

8. Feuchtwischer nach einem der Ansprüche 1 bis 7, **dadurch gekennzeichnet, dass** zumindest die Verschiebehülse (17) mit dem Druckarmen (20, 21) im Gasinnendruckverfahren hergestellt ist.

9. Feuchtwischer nach einem der Ansprüche 1 bis 8, **dadurch gekennzeichnet, dass** die Gelenkhebel (24) endseitig über eine angeformte Kugel (26) in einer in den Wischplatten (1, 2) verrasteten Kugelaufnahme (27) beweglich gelagert sind.

10. Feuchtwischer nach einem der Ansprüche 1 bis 9, **dadurch gekennzeichnet, dass** zur Halterung der Kugelaufnahme (27) in den Wischplatten (1, 2) in einer elliptischen Erhöhung (28) Haltehülsen (29) eingeformt sind.

## Claims

1. Sponge mop for plane surfaces, with two mop plates (1, 2) with mop pad (33), which mop plates (1, 2) are secured on a handle (14), are connected to one another via a double joint and can be pressed against one another by means of joint levers (24) which are arranged on press arms (20, 21) which are configured in a V-shape, the handle (14) being secured so as to pivot on the double joint (4, 5, 6), and a slide sleeve (17) being mounted on the handle (14), on which slide sleeve the press arms (20, 21) are integrally formed and are connected movably to the mop plates (1, 2) with mop pad (33) via the joint levers (24), **characterized in that** the double joint is formed by the mop plates (1, 2) each being connected by a film hinge (4, 5) to an intermediate plate (6) on which a web (7) is integrally formed for connection to a pivotable handle holder.

2. Sponge mop for plane surfaces according to Claim 1, **characterized in that** the joint levers (24) are articulated centrally on the mop plates (1, 2).

3. Sponge mop for plane surfaces according to Claim 1 or 2, **characterized in that** holding hooks (31) for connection to the sponge pad (33) are integrally formed on the underside of the mop plates (1, 2).

4. Sponge mop for plane surfaces according to one of Claims 1 to 3, **characterized in that** the mop pad (33) is made in at least two layers consisting of a grip part and an active mopping part (32, 34).

5. Sponge mop for plane surfaces according to Claim 4, **characterized in that** the active mopping part (34) consists of a chamois leather (synthetic or natural).

6. Sponge mop for plane surfaces according to Claim 4, **characterized in that** the active mopping part (34) is made from a tufted or woven cloth having nap yarns of a cotton wool and polyester fibre mix.

7. Sponge mop according to Claim 4, **characterized in that** the active mopping part (34) is made from a cloth having linen nap yarns.

8. Sponge mop according to one of Claims 1 to 7, **characterized in that** at least the slide sleeve (17) with the press arms (20, 21) is formed by the internal gas pressure method.

9. Sponge mop according to one of Claims 1 to 8, **characterized in that** the ends of the joint levers (24) are mounted movably, by way of an integrally moulded ball (26), in a ball holder (27) locked in the mop plates (1, 2).

10. Sponge mop according to one of Claims 1 to 9, **characterized in that**, for mounting the ball holder (27) in the mop plates (1, 2), retaining sleeves (29) are integrally formed in an elliptical elevation (28).

## Revendications

1. Appareil de nettoyage humide de surfaces planes comprenant deux plaques de lavage (1, 2) avec une éponge (33) pouvant être pressées l'une contre l'autre, fixées à un manche (14), connectées en intercalant entre elles une double articulation, au moyen de leviers articulés (24) disposés sur des bras de pression (20, 21) orientés en forme de V, le manche (14) étant fixé de manière à pouvoir pivoter sur la double articulation (4, 5, 6), et un manchon coulissant (17) étant monté sur le manche (14), sur lequel sont formés les bras de pression (20, 21) qui sont connectés de manière mobile par le biais des leviers articulés (24) aux plaques de lavage (1, 2) avec une éponge (33), **caractérisé en ce que** pour la création de la double articulation, les plaques de lavage (1, 2) sont à chaque fois connectées par le biais d'une charnière plate (4, 5) à une plaque intermédiaire (6) sur laquelle est formée une ailette (7) pour la connexion à un logement de manche pivotant.

2. Appareil de nettoyage humide de surfaces planes selon la revendication 1, **caractérisé en ce que** les leviers articulés (24) sont articulés au milieu aux plaques de lavage (1, 2).

3. Appareil de nettoyage humide de surfaces planes selon la revendication 1 ou 2, **caractérisé en ce que** le côté inférieur des plaques de lavage (1, 2) présente des crochets de fixation (31) moulés pour la connexion à l'éponge (33).

4. Appareil de nettoyage humide de surfaces planes selon l'une quelconque des revendications 1 à 3, **caractérisé en ce que** l'éponge (33) est constituée au moins de deux couches formées d'une partie d'adhérence au sol et d'une partie de nettoyage active (32, 34).

5. Appareil de nettoyage humide de surfaces planes selon la revendication 4, **caractérisé en ce que** la partie de nettoyage active (34) est constituée d'une peau chamoisée (synthétique ou naturelle).

6. Appareil de nettoyage humide de surfaces planes selon la revendication 4, **caractérisé en ce que** la partie de nettoyage active (34) est fabriquée en un tissu tufté ou tissé présentant des fils de poils en un mélange de fibres de laine et de polyester.

7. Appareil de nettoyage humide selon la revendication 4, **caractérisé en ce que** la partie de nettoyage active (34) est fabriquée en un tissu présentant des fils de poils en lin.

8. Appareil de nettoyage humide selon l'une quelconque des revendications 1 à 7, **caractérisé en ce qu'**au moins le manchon coulissant (17) avec les bras de pression (20, 21) est fabriqué dans un procédé à pression de gaz interne.

9. Appareil de nettoyage humide selon l'une quelconque des revendications 1 à 8, **caractérisé en ce que** les leviers articulés (24) sont montés mobiles du côté d'une extrémité par le biais d'une bille moulée (26) dans un logement de bille (27) encastré dans les plaques de lavage (1, 2).

10. Appareil de nettoyage humide selon l'une quelconque des revendications 1 à 9, **caractérisé en ce que** pour la fixation du logement de bille (27) dans les plaques de lavage (1, 2), on forme des manchons de fixation (29) dans un rehaussement de forme elliptique (28).
